# DEMANDE DE BREVET EUROPEEN

(11) **EP 1 094 096 A1**
(43) Date de publication de la demande: **25.04.2001**
(21) Numéro de dépôt: 99640005.7
(22) Date de dépôt: 22.10.1999
(51) Int. Cl.: C09D 7/14

(54) **Procédé pour réaliser des peintures en mélangeant des quantités prédéterminées de produits fluides**

(71) Demandeur: Bizzio Nickolas, MC 98000 (MC)
(72) Inventeur: Bizzio Nickolas, MC 98000 (MC)
(74) Mandataire: Frateschi Capart, Sylvia

(57) **Abrégé**

Un procédé pour réaliser des peintures, en mélangeant des quantités prédéterminées de produits colorants à des produits de base de vernissage, comprenant les phases suivantes: (a) préparer un composant monobase fluide comprenant des quantités prédéterminées d'un élément liant et d'un élément de remplissage ou filler, la proportion de ces quantités dépend de la qualité de la peinture finale souhaitée; (b) ajouter au produit monobase fluide, conformément aux formulations proportionnelles optimisées et prédéterminées d'après la coloration de la peinture finale souhaitée, les quantités prédéterminées d'au moins un composant fluide sélectionné dans le groupe incluant un composant fluide comprenant du blanc de titane TiO₂ et d'un composant fluide comprenant un élément de remplissage ou filler. Pour obtenir des colorations de la peinture finale différentes du blanc, au composant monobase fluide sont ajoutées des quantités prédéterminées de composants fluides comprenant des pigments colorants.

## Description

Cette invention concerne un procédé pour réaliser des peintures, surtout en mélangeant des quantités prédéterminées de produits fluides. Elle intéresse également un système mesurant la teinture et un produit de fluide de base pour réaliser des peintures.

Les procédés pour produire les peintures colorées se basent depuis déjà un certain temps sur les soi-disant systèmes mesurant la teinture. L'idée fondamentale de ces systèmes est celle de teindre un produit de base ayant de bonnes caractéristiques de couverture-garanties, par exemple, par la présence d'un pourcentage prédéterminé de blanc de titane TiO² - avec de petits pourcentages prédéterminés de pigments colorés qui, en se mélangeant entre eux et au produit de base, donnent à la peinture finie la coloration voulue. Les pourcentages de colorants nécessaires pour obtenir une couleur spécifique sont établis par des formules proportionnelles étudiées par les producteurs de bases et de colorants. Toutefois, le seul emploi de produits de base contenant TiO² ne permet pas d'obtenir toutes les couleurs de l'entière gamme chromatique. Bien que le pouvoir couvrant d'un pigment noir sont très fort, par exemple, il ne sera jamais possible d'obtenir une peinture complètement noire si le produit de base contient de petits pourcentages, même si faibles, de TiO² qui, comme chacun sait, est de couleur blanche : La couleur blanche de celui-ci contaminerait inévitablement le noir et donnerait donc une peinture qui résulterait plus ou moins grise. Pour obtenir donc la couleur noire, et aussi beaucoup d'autres couleurs très foncées, des systèmes mesurant la teinture ont été proposés. Ceux-ci comprennent, en plus du groupe de produits de base contenant des pourcentages prédéterminés de TiO², un produit de base transparent, c'est à dire sans TiO² et contenant en majeure partie un produit épaississant de couleur neutre ou peu couvrante, appelé « filler » (mastic), qui sert à donner du corps à la peinture finie de sorte que celle-ci prenne la consistance souhaitée.

Pour les raisons ci-dessus, même le système mesurant la teinture connue et le plus « sommaire » doit nécessairement prévoir la sélection et l'emploi, suivant la couleur de la peinture finie souhaitée, d'un produit de base choisi dans un groupe comprenant au moins deux produits de base distincts : Un produit de base blanc, contenant d'élevés pourcentages de TiO², typiquement autour de 20% et un neutre, sans TiO² La sélection de l'un ou de l'autre de produit de base est normalement faite par du personnel spécialisé, en fonction des indications fournies par les producteurs de colorants par rapport à la coloration spécifique de la peinture finale souhaitée.

Naturellement, dans un tel système de mesurage de la teinture qui se limite à deux seuls produits de base, le rendement optimal s'obtient en général seulement pour les couleurs qui se trouvent aux deux extrémités de la gamme chromatique, c'est-à-dire pour les couleurs très foncées (pour les obtenir il faut utiliser des produits de base neutres) ou pour les couleurs pastel (réalisées à partir de produits de base blancs à haut contenu de TiO²). Certains producteurs de colorants ont proposé des systèmes mesurant la teinture qui utilisent plus de deux produits de base pour essayer d'obtenir des résultats optimaux également dans le champ intermédiaire de couleurs compris entre les teintes foncées et les couleurs pastel, alors que d'autres producteurs ont même proposé des bases colorées, en plus des bases blanches à différent titre de TiO² et de celle neutre ou transparente. Dans certains cas, on est même arrivé à proposer des systèmes mesurant la teinture qui, suivant la couleur de la peinture finie souhaitée, prévoient la sélection et l'emploi d'un produit de base choisi dans un groupe qui en comprend même dix différents types.

On remarque immédiatement que les systèmes mesurant la teinture sont en train d'évoluer vers un nombre toujours plus grand de produits de base, à la recherche d'optimiser l'utilisation des pigments colorés, certainement coûteux et souvent même polluants, afin d'en réduire les pourcentages nécessaires pour la production de toutes les couleurs de la gamme chromatique, tout en garantissant des caractéristiques de couverture qui soient satisfaisantes. Cette évolution comporte toutefois de sérieux désavantages dans la production de peintures finies puisqu'on demande du personnel toujours plus spécialisé pour sélectionner le produit de base correct et ce dans le but d'obtenir la peinture colorée souhaitée. L'emploi de produits de base différents comporte aussi l'augmentation des stocks nécessaires pour garantir toujours la disponibilité du produit de base plus approprié à réaliser une peinture spécifique. Les procédés industriels de fabrication et la gestion, même commerciale, de produits de base différents comportent naturellement des coûts élevés et des temps longs. Paradoxalement, en poussant à l'extrême la tendance qui s'est depuis peu manifestée, à savoir celle de fournir un nombre toujours plus grand de produit de base, on se retrouverait très tôt à devoir faire face aux même problèmes (gros stocks de magasin et basse rotation des produits) qui, dans le passé, ont amené à l'adoption des premiers systèmes mesurant la teinture.

Les désavantages mis en évidence ci-dessus sont amplifiés par le fait que normalement il faut réaliser des peintures ayant des caractéristiques chimico-physiques différentes selon les applications et pour chaque type de peinture il faudra prévoir un groupe différent de produits de base, comme défini par le système mesurant la teinture adoptée. Si l'on veut donc avoir des produits de vernissage idoines à différente utilisation, appropriés, par exemple, pour l'intérieur ou l'extérieur, pour être appliqués sur différentes surfaces (bois, pierre, brique, verre, papier, etc.), pour un emploi professionnel ou à caractère amateur, avec des caractéristiques spéciales de transpiration, antimoisissure, de haute ou basse qualité, etc., il faut donc, avec des systèmes traditionnels qui mesurent la teinture, avoir en magasin un nombre de base énorme ce qui entraîne un certain nombre de problèmes qu'on peut facilement imaginer, à savoir de gestion, approvisionnement et stockage.

Le but de cette invention est celui de résoudre les inconvénients de la technique connue et en particulier de surmonter complètement les problèmes qui s'annoncent avec l'évolution des systèmes mesurant la teinture et les dernières tendances suivies, traitées brièvement ci-dessus. L'objectif de l'invention est surtout celui de fournir une méthode de production de peintures qui puisse être réalisée de manière simple et, si possible, automatisée de sorte que même un utilisateur inexpert puisse obtenir une peinture colorée à son gré sans qu'il doive se préoccuper de sélectionner chaque fois le produit de base le plus approprié pour obtenir la coloration finale qu'il souhaite donner au produit fini.

Un autre but de l'invention est celui de réaliser un système de production de peintures permettant d'optimiser l'emploi des pigments colorés et le pouvoir couvrant de la peinture finie.

L'invention, pour pouvoir atteindre ces buts susmentionnés, a pour objet un procédé du type indiqué dans l'avant-propos de cette description se caractérisant par le fait qu'il comprend les phases suivantes :
a) préparer un composant monobase fluide comprenant des quantités proportionnellement prédéterminées d'un élément liant et d'un élément de remplissage ou filler;
b) ajouter un composant monobase fluide, lors de la préparation de la peinture finale et conformément à une formulation proportionnelle optimisée et prédéterminée d'après la coloration souhaitée de la susdite peinture finale, des quantités prédéterminées d'au moins un composant fluide sélectionné dans le groupe comprenant :
   - un composant fluide comprenant du blanc de titane TiO²;
   - un composant fluide comprenant un élément de remplissage ou filler.

Pour obtenir une peinture finie de coloration différente du blanc, au composant monobase fluide sont ajoutés un ou plusieurs composants fluides comprenant des éléments de pigment ou colorants.

En d'autres mots, l'idée fondamentale de l'invention consiste dans la préparation initiale d'un seul produit fluide, que nous appellerons avec le terme « monobase » dans la suite de cette description, prêt à être utilisé pour la formulation de peintures de n'importe quelle couleur voulue, et ce en ajoutant de manière sélective et optimale du blanc de titane, des pigments et du filler.

En définitive, l'invention permet de formuler le produit de base, entendu dans le sens traditionnel du terme, en fonction de la couleur à obtenir, ce qui fait qu'elle se distingue radicalement des systèmes mesurant la teinture déjà existants où la formation des différents produits de base est strictement préétablie par le producteur.

Les avantages de l'invention sont immédiatement reconnaissables. Tout d'abord les quantités de produits en magasin se réduisent considérablement vu qu'il est nécessaire de garder, en termes généraux, seulement des stocks de colorants, blanc de titane et filler, en plus d'un seul autre produit fondamental pour chaque emploi spécifique d'application qui, dans la suite de cette description, sera justement identifié par le susdit terme « monobase » afin de le distinguer des produits de base des systèmes traditionnels qui mesurent la teinture.

Un autre avantage important dérive du fait que, d'après l'invention, il est possible d'optimiser la quantité de colorants nécessaire pour obtenir chaque teinte dans la gamme chromatique en optimisant en même temps le pouvoir couvrant de la peinture finie. Il faut en effet tenir en considération que le plus grand coût d'une peinture finie est représenté par les colorants ou pigments utilisés pour sa réalisation qui, d'ailleurs, sont normalement polluants pour l'environnement et doivent donc être éliminés de manière appropriée, ce qui entraîne logiquement des coûts supplémentaires, comme, par exemple, les récipients qui les contiennent. En pouvant varier le contenu de blanc de titane TiO² en fonction de chaque teinte spécifique, il est possible d'atteindre le niveau optimal minimum de colorants nécessaire pour obtenir cette même teinte sans qu'il soit nécessaire - comme il arrive par contre dans la technique connue - d'ajouter, par exemple, des quantités en surplus de colorants pour corriger ou compenser un excès de TiO² dans le produit de base traditionnel.

Un autre avantage de l'invention est constitué par la possibilité d'automatiser de façon presque complète le procédé de production des peintures finies. Puisqu'il n'est pas nécessaire d'avoir du personnel spécialisé qui sélectionne le type de produit de base le plus approprié à la réalisation d'un produit fini de la couleur souhaitée, il est possible de réaliser une machine dispensatrice qui distribue, dans une boîte ou récipient prérempli de produit monobase, des quantités prédéfinies de colorants, TiO² et filler, en plus d'éventuels agent d'allongement et additifs, dans de l'eau ou solvant, afin d'obtenir la peinture de la couleur souhaitée.

D'autres caractéristiques et avantages résulteront de la description détaillée qui suit portant sur des exemples concernant des réalisations qui ne doivent toutefois pas être considérés comme limitatifs pour l'invention.

En termes généraux, une peinture finie comprend les éléments suivants ou groupes d'éléments principaux qui en définissent les propriétés chimico-physiques :
a) une ou plusieurs substances filmogènes ou liantes, auxquelles sont attribuées la dureté et le brillant des surfaces vernies, parmi lesquelles nous rappelons, par exemple, les résines synthétiques comme les résines phénoliques, acryliques, alkydes, epoxydes, au styrène, polyuréthaniques, etc., ou bien des dérivés de la cellulose (par ex., nitrocellulose et acétocellulose) ou bien les résines naturelles (par ex., copal), et d'autres encore qui sont normalement connues aux experts du secteur;
b) substances de remplissages, fillers ou épaississants, comme, par exemple, le carbonate de calcium CaC03 qui donne du corps à la peinture ou vernis;
c) un moyen diluant, comme, par exemple, un solvant ou de l'eau;
d) un ou plusieurs pigments, parmi lesquels le blanc de titane TiO² et/ou les pigments colorés de différents types, naturels ou synthétiques, organiques ou inorganiques, ayant intrinsèquement un différent pouvoir couvrant;
e) divers additifs, comme les composés antimoisissure, antifermentatifs, siccatifs, antipeau, etc.

D'après l'invention, un seul produit monobase est préparé et celui-ci contiendra des proportions prédéterminées de liant et filler, diluées dans de l'eau ou du solvant suivant l'utilisation et les caractéristiques du produit de vernissage fini. Les additifs, dont les pourcentages dans une peinture sont généralement bas, peuvent être ajoutés déjà à la monobase ou bien par la suite lors de la préparation de la peinture finie.

Pour produire une peinture finie ayant une coloration quelconque sélectionnée dans l'entière gamme chromatique, à une quantité prédéterminée de produit de monobase, sélectionné en fonction de l'utilisation finale de la peinture (et non sur la base de la couleur que la peinture devra prendre, comme il arrive par contre dans les systèmes traditionnels qui mesurent la teinture), sont ajoutées, de préférence à l'aide d'une machine dispensatrice, des quantités de filler et de pigments dont le pourcentage est prédéterminé, dans ces derniers sont compris aussi bien les habituels pigments colorés que le blanc de titane TiO² de sorte que la somme des quantités de produit monobase, filler additionnel et pigments (en plus des éventuels additifs, dans le cas où ceux -ci seraient ajoutés à la monobase et ne seraient pas déjà dispersés dans cette dernière) donne la quantité totale de peinture voulue, dans la couleur souhaitée. Les pourcentages de filler et de pigments sont définis par une formulation prédéterminée par le fabricant du produit monobase et des colorants qui définit les rapports optimaux entre les différents composants de sorte à fournir, pour chaque couleur de la gamme chromatique, une peinture finie optimisée.

### Exemple 1

Les peintures de haute qualité ont un contenu élevé de liant et de pigments, plus coûteux du filler, qui donnent toutefois à la peinture un bon pouvoir couvrant et un bon rendement en la rendant ainsi plus appropriée à un emploi professionnel.

Pour obtenir une peinture de haute qualité de couleur ivoire il faut sélectionner un produit monobase de haute qualité comprenant environ 35% d'une ou plusieurs substances liantes et environ 20% d'un composant filler connu, en plus, éventuellement, de 14% environ d'additifs, le tout dilué dans de l'eau ou solvant, par exemple suivant le type de substances liantes ou filmogènes et, définitive, de l'utilisation finale à laquelle est destiné le produit de vernissage fini que l'on, entend obtenir.

Pour obtenir un certain volume de peinture finale, auquel correspond une valeur égale à 100% d'un paramètre que nous appelons « niveau de remplissage » ou « fill level », on part d'une préparation contenant déjà environ 72% de fill level du produit monobase décrit ci-dessus. Pour atteindre un fill level de 100% l'utilisateur ou la machine dispensatrice ajouteront à ce produit monobase environ 28% de fill level de composants additionnels ainsi répartis schématiquement : 25% de TiO² en eau ou solvant et 3% de colorant universel jaune. La peinture résultant après avoir mélangé la monobase avec les composants additionnels est de couleur ivoire et est de haute qualité grâce à la présence élevée d'environ 25% au total de liant.

### Exemple 2

Pour obtenir une peinture de haute qualité de couleur grise on part d'une monobase identique à celle indiquée dans l'Exemple 1.

Pour atteindre un fill égal à 100%on part d'une préparation contenant déjà environ 72% de la monobase décrite ci-dessus. A cette monobase, l'utilisateur ou la machine dispensatrice doivent ajouter 28% environ de composants additionnels ainsi répartis schématiquement : 100% de TiO² en eau ou solvant et 3% de colorant universel noir, ayant notoirement un pouvoir couvrant supérieur au colorant universel jaune et, en outre, 15% de filler.

### Exemple 3

Pour obtenir une peinture de haute qualité de couleur noire on part d'une monobase identique à celle qui est indiquée dans l'exemple 1.

Pour atteindre un fill level égal à 100% on part d'une préparation contenant déjà environ 72% de la monobase décrite ci-dessus. A cette monobase, l'utilisateur ou la machine dispensatrice doivent ajouter 28% environ de composants additionnels ainsi répartis schématiquement : 10% de colorant universel noir et, en outre, 18% de filler.

### Exemple 4

Au contraire des peintures de haute qualité, les peintures de basse qualité ont un contenu plus élevé de filler, moins coûteux du liant et des pigments, et sont donc plus appropriées à être utilisées par des amateurs.

Pour obtenir une peinture de basse qualité de couleur ivoire on part d'une monobase contenant environ 11% d'un ou plusieurs liants connus et 44% environ d'un filler connu, en plus, éventuellement, de 11% environ d'additifs, le tout dilué dans de l'eau ou du solvant suivant les caractéristiques du liant (substance filmogène) et, en définitive, de l'utilisation à laquelle est destiné le produit de vernissage fini que l'on entend obtenir.

Pour atteindre un fill level égal à 100%on part d'une préparation contenant déjà environ 90% de la monobase décrite ci-dessus. A cette monobase, l'utilisateur ou la machine distributrice doivent ajouter 10% de composants additionnels ainsi répartis schématiquement : 9,5% de TiO² en eau ou solvant et 0,5% de colorant universel jaune. La peinture résultant après avoir mélangé la monobase avec les composants additionnels est une peinture de basse qualité à cause de la forte présence de filler, environ 40% de la peinture totale, par rapport au liant.

### Exemple 5

Pour obtenir une peinture de basse qualité de couleur grise on part d'une monobase identique à celle qui est indiquée dans l'Exemple 4.

Pour atteindre un fill level égal à 100% on part d'une préparation contenant déjà environ 90% de la monobase décrite ci-dessus. A cette monobase, l'utilisateur ou la machine dispensatrice doivent ajouter 10% environ de composants additionnels ainsi répartis schématiquement : 3% de TiO² en eau ou solvant et 0,5% de colorant universel noir et aussi 6,5% de filler. La peinture résultant après avoir mélangé la monobase avec les composants additionnels est une peinture de basse qualité à cause de la forte présence de filler qui est supérieur à 45%.

### Exemple 6

Pour obtenir une peinture de basse qualité de couleur noire on part d'une monobase identique à celle qui est indiquée dans l'Exemple 4.

Pour atteindre un fill level égal à 100% on part d'une préparation contenant déjà environ 90% de la monobase décrite ci-dessus. A cette monobase, l'utilisateur ou la machine dispensatrice doivent ajouter 10% environ de composants additionnels ainsi répartis schématiquement : 3% de colorant universel noir et aussi 7% de filler. La peinture résultant prés avoir mélangé la monobase avec les composants additionnels est une peinture de basse qualité à cause de la forte présence de filler, égale environ à 47% de la peinture totale.

Les différents pourcentages indiqués dans les exemples précédents sont donnés essentiellement pour permettre de faire des comparaisons et ne doivent pas être considérés comme limitatifs ni réduire par conséquent les possibilités de réalisation de même que des formes de mise en oeuvre de cette invention qui pourra être concrétisée par un technicien expert du secteur disposé à apprendre les enseignements contenus dans cette description. Aux seuls fins de comparaison donc les pourcentages des exemples précédents sont résumés dans le tableau 1 ci dessous.

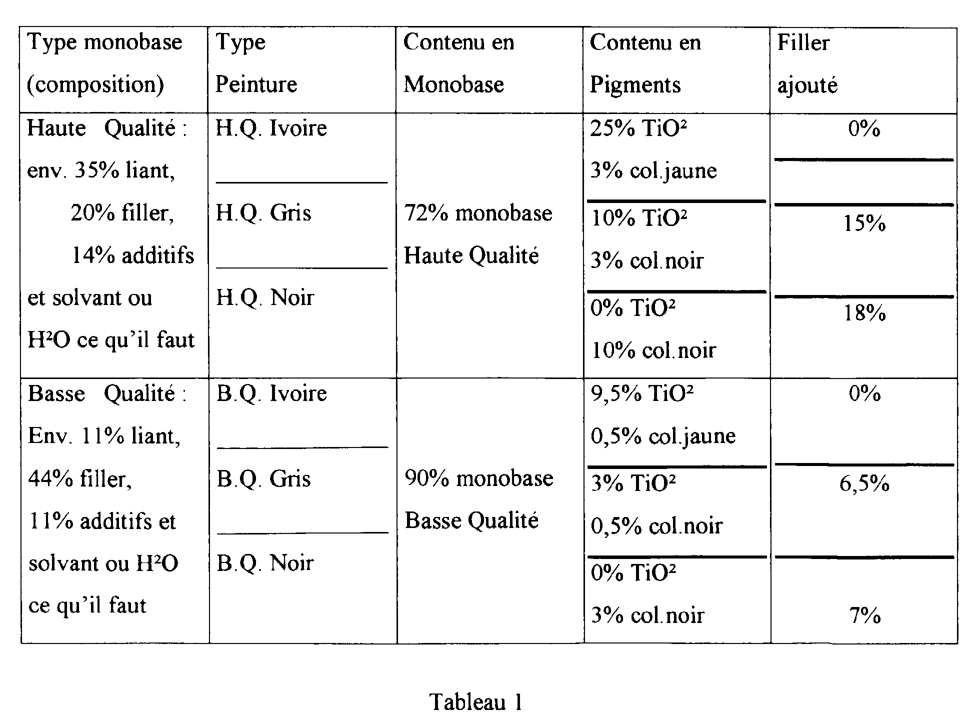

La différence entre les deux types de peintures de haute et basse qualité est donnée comme exemple pour montrer comment les seuls choix nécessaires qu'un utilisateur doit faire lors de la réalisation d'une peinture finie sont la sélection de la coloration souhaitée et le produit monobase dont la qualité est la plus appropriée suivant l'utilisation à laquelle est destiné le produit de vernissage final (professionnel ou à caractère amateur). Les pourcentages indiqués sont naturellement seulement à titre indicatif et servent à illustrer par des exemples le concept novateur qui est à la base de cette invention du moment que les formulations exactes peuvent être obtenues expérimentalement par les producteurs de produit de vernissage sur la base des caractéristiques chimico-physiques des composés et des substances spécifiques constituant les liants, fillers, colorants, etc.

Il est important de remarquer comment les résultats qui peuvent être obtenus avec cette invention ne peuvent être atteints en adoptant simplement un normal produit de base transparent ou neutre des systèmes traditionnels qui mesurent la teinture au lieu du produit monobase de cette invention. Ces produits de base transparents connus ont en effet un contenu de filler plutôt élevé et sont appropriés à réaliser des peintures foncées en y ajoutant de basses quantités de colorants foncés qui ont notoirement un pouvoir couvrant élevé. Si avec une base transparente traditionnelle on devait par contre réaliser une peinture de couleur pastel ayant un pouvoir couvrant satisfaisant, il serait nécessaire d'y ajouter des quantités de pigments tellement élevées qu'elles dénatureraient la structure de la peinture elle-même et qui seraient de toute manière telles qu'elles entraîneraient la hausse du coût de la peinture à des niveaux inacceptables.

L'utilisation, en se rapportant à cette invention, à laquelle est destiné le produit de vernissage ou peinture définit le type de produit monobase adopté pour toute la gamme de colorations du produit de vernissage fini. Bien que dans les exemples précédents on fait une distinction entre un produit monobase de haute qualité et un produit monobase de basse qualité, il est naturellement possible d'avoir un système mesurant la teinture différent, destiné à la production de peintures de qualité intermédiaire par rapport à celles qui ont été illustrées par les exemples ci-dessus et comprenant donc un produit monobase de qualité intermédiaire par rapport à celles mentionnées ci-dessus. Les composants pour la production de peintures qui, en en plus de la monobase, complètent le système mesurant la teinture de cette invention (pigments, blanc de titane, fillers et éventuels additifs) sont fournis dans une forme fluide facile à transporter dans des récipients pour liquides et simple à traiter dans la production de peinture moyennant, par exemple, l'utilisation de machines dispensatrices de fluides de type généralement connu.

### Exemple 7

Pour obtenir un produit de vernissage à eau de qualité moyenne et satisfaisant, par exemple, pour les emplois de type semi-professionnel, de couleur blanche, il faut préparer un produit monobase fluide et une solution de TiO²

La monobase fluide comprend environ 24% d'une émulsion liante, environ 36% d'un filler, environ 6% d'une pâte de cellulose et environ 12% d'additifs, le tout dilué dans de l'eau, qui atteint 22% environ du volume totale de la monobase. La monobase se présente donc sous une forme fluide, conditionnée dans des boîtes, et résulte facilement transportable dans des récipients de différents formats.

La solution fluide du blanc de titane TiO² comprend environ 75% en volume de TiO², 1% environ d'un produit bactéricide, 2% environ d'un agent dispersant ou mouillant, le tout dilué dans de l'eau, qui atteint donc 22%environ du volume total de la solution de TiO².

Etant donné les composants fluides (monobase fluide et solution de TiO²) spécifiés ci-dessus, un produit de vernissage ou peinture finie de couleur blanche peuvent être obtenus en ajoutant et mélangeant à une quantité de produit monobase fluide, égal à 80% du fill level, le restant 20% de solution fluide de TiO² nécessaire pour atteindre le fill level de 100%. Le pourcentage en volume de chaque élément à l'intérieur du produit de vernissage fini sera donc égal à environ 20% (19,2%) d'émulsion liante, environ 30% (28,8%) de filler, environ 15% de TiO², environ 5% (4,8%) de pâte de cellulose, environ 10% (10,2%) d'additifs, le tout dilué dans de l'eau égale à environ 22% du volume total du produit fini, vu qu'aussi bien la monobase que le blanc de titane sont déjà fournis dans uns solution aqueuse.

Les pourcentages des différents éléments présents dans les composants fluides qui constituent après tout la peinture finale sont résumés dans le tableau 2 ci-dessous.

**Tableau 2**

| Elément | Composant Monobase fluide | Composant Solution TiO² | Peinture blanche 80% monobase 20% solut. TiO² |
|---|---|---|---|
| Emulsion | 24% | 0% | 19,2% |
| Eau | 22% | 22% | 22,0% |
| Filler | 36% | 0% | 28,8% |
| TiO² | 0% | 75% | 15% |
| Pâte de cellulose | 5% | 0% | 4,8% |
| Additifs | 12% | 3% (=2%+1%) | 10,2% |

### Exemple 8

Si l'on veut obtenir, toujours en utilisant la monobase fluide de l'exemple précédent, des peintures de différents tons de gris jusqu'à arriver à la couleur noire, il suffit de préparer, en plus des composants fluides indiqués ci-dessus (monobase fluide et solution de TiO²), un composant filler fluide et un composant colorant universel noir.

Le composant filler fluide comprend, par exemple, environ 68% en volume d'un mélange de produits, des poussières de remplissage, par exemple, de type connu (le véritable élément « filler »), 2% environ de pâte de cellulose, 3% d'une émulsion liante, 1% environ de produit bactéricide, 1% environ d'un agent dispersant ou mouillant, le tout dilué dans de l'eau qui atteint donc 25% environ du volume total du composant filler fluide.

Le colorant universel noir est de type généralement connu dans le secteur et est fourni déjà sous la forme fluide, il peut donc être facilement mélangé avec les autres composants de la peinture. L'exacte composition du colorant n'influe pas sur cette invention qui se propose justement d'optimiser, en la réduisant au minimum, la quantité de colorant nécessaire pour obtenir le produit coloré fini souhaité.

Etant donné les quatre composants fluides mentionnés ci-dessus (monobase fluide en boîte; filler, TiO² et colorant noir fluides qui peuvent être distribués), il est possible d'obtenir par exemple :
- une peinture gris clair en mélangeant à une monobase en boîte, remplie à 80% environ du fill level, 18% environ de solution TiO² et 2% environ de colorant noir pour ainsi atteindre le fill level de 100%
- Une peinture gris moyen en mélangeant à une monobase en boîte, remplie à 80% environ du fill level, 10% environ de solution TiO², 4% environ de colorant noir et en ajoutant aussi 6% environ de produit filler fluide pour atteindre le fill level total de 100%
- Une peinture gris foncé en mélangeant à une monobase en boîte, remplie à 80% environ du fill level, 4% environ de solution TiO², 6% environ de colorant noir et en ajoutant ensuite 10% environ de produit filler fluide pour atteindre le fill level total de 100% ;
- Une peinture noir en mélangeant à une monobase en boîte, remplie à 80% environ du fill level, 8% environ de colorant noir et 12% environ de produit filler fluide, sans aucun besoin d'ajouter la solution TiO².

Le composant monobase fluide est préparé en boîtes et récipients déjà prêts à recevoir les autres composants, vu la constance substantielle du pourcentage de composant monobase fluide nécessaire pour obtenir des peintures d'une coloration quelconque comprise dans la gamme chromatique. En se référant aux deux derniers exemples 7 et 8, il est donc possible de préparer en magasin des récipients aux dimensions voulues, déjà préremplis à 80% de leur volume par le seul composant monobase fluide employé pour la préparation des peintures définitives.

Avec le système de cette invention il est donc possible de réduire le nombre de composants à assembler lors de la production d'une peinture de la couleur souhaitée comprise dans l'entière gamme chromatique. Le principe fondamental est celui de la formulation de la base, ainsi qu'elle est traditionnellement entendue, à partir d'un monobase unique pour chaque qualité de peinture en y ajoutant du TiO² et/ou filler - en quantités prédéterminées supérieures ou égales à 0% en fonction de la couleur finale souhaitée - lors de la préparation de la couleur elle-même. Cette adjonction d'éventuelles quantités de blanc de titane et de composant filler peut naturellement se faire aussi bien manuellement qu'automatiquement à l'aide d'une machine dispensatrice, comme il arrive déjà dans les systèmes traditionnels qui mesurent la teinture, en se référant à la distribution de pigments colorés dans les bases connues. Avec cette invention l'utilisation du colorant est optimisée car celui-ci n'est jamais ajouté en quantités supérieures au nécessaire puisque, contrairement à ce qui arrive dans les systèmes traditionnels qui mesurent la teinture, il n'est jamais nécessaire de contrebalancer un excès ou un manque de blanc de titane. L'économie résultant dans l'emploi de colorants se traduit immédiatement en un coût inférieur de la peinture finie, en plus que dans un impact moins grand sur l'environnement provoqué par la nocivité générale des colorants eux-mêmes. Pour terminer, grâce à cette invention, pour chaque qualité déterminée de peinture finie, le pouvoir couvrant de la peinture finie elle-même devient aussi optimal.

Naturellement, étant bien entendu que le principe de ce qui a été trouvé reste valable, les caractéristiques de réalisation et les formes de mise en oeuvre pourront varier par rapport à ce qui a été décrit sans pour autant fourvoyer du cadre de l'invention.

## Revendications

1. procédé pour réaliser des peintures, surtout en mélangeant des quantités prédéterminées de produits fluides, se caractérisant par le fait qu'il comprend les phases suivantes :
c) préparer un composant monobase fluide comprenant des quantités d'un élément liant et d'un élément de remplissage ou filler dont le pourcentage est prédéterminé ;
d) ajouter au composant monobase fluide, lors de la préparation de la peinture finale et conformément à une formulation proportionnelle optimisée et prédéterminée d'après la coloration souhaitée de la susdite peinture finale, des quantités prédéterminées d'au moins un composant fluide sélectionné dans le groupe comprenant :
- un composant fluide comprenant du blanc de titane TiO² ;
- un composant fluide comprenant un élément de remplissage ou filler.

2. Procédé selon la revendication 1 se caractérisant par le fait qu'il comprend aussi la phase ci-dessous :
c) ajouter au composant monobase fluide, conformément à la susdite formulation, des quantités prédéterminées d'au moins un composant fluide comprenant au moins une substance pigment ou colorante.

3. Procédé selon la revendication 2 se caractérisant par le fait que les phases b) et c) sont effectuées simultanément.

4. Procédé selon la revendication 1 se caractérisant par le fait que les susdites quantités, proportionnellement prédéterminées, d'élément liant et d'élément de remplissage ou filler comprises dans le composant monobase fluide dépendent de la qualité de la peinture finale souhaitée.

5. Procédé selon la revendication 1 se caractérisant par le fait qu'au composant monobase fluide sont aussi ajoutées des substances additives telles que les composés antimoisissure, antifermentatifs, siccatifs, antipeau, etc.

6. Procédé selon la revendication 1 se caractérisant par le fait que les composants fluides comprennent des quantités proportionnellement prédéterminées d'un moyen solvant.

7. Système mesurant la teinture servant à réaliser des peintures colorées se caractérisant par le fait qu'il comprend :
- un composant monobase fluide comprenant des quantités prédéterminées d'un élément liant et d'un élément de remplissage ou filler, la proportion des susdites quantités dépend de la qualité de la peinture finale souhaitée ;
- un composant fluide comprenant du blanc de titane TiO² ;
- une multiplicité de composants fluides comprenant au moins une substance pigment ou colorante ;
- un composant fluide comprenant des quantités prédéterminées d'un composant de remplissage ou filler.

8. Composant fluide de base servant à réaliser des peintures se caractérisant par le fait qu'il est sans blanc de titane TiO², mais qu'il contient une quantité proportionnellement prédéterminée d'un élément de remplissage ou filler inférieur à la quantité totale optimale permettant d'obtenir une peinture finie de couleur noire comprenant le susdit composant fluide.

9. Composant fluide de base selon la revendication 8 se caractérisant par le fait qu'il comprend des quantités d'émulsion liante, d'un composant de remplissage, d'une pâte de cellulose et d'additifs dont le pourcentage est prédéterminé, le tout dans de l'eau ou solvant.

10. Utilisation d'un composant fluide de base selon la revendication 8 en tant que composant monobase fluide permettant de réaliser le procédé selon la revendication 1.

11. Utilisation d'un composant fluide de base selon la revendication 8 en tant qu'unique composant monobase fluide du système mesurant la teinture selon la revendication 7.
